# EUROPÄISCHE PATENTSCHRIFT

(11) **EP 1 705 892 B1**
(45) Veröffentlichungstag und Bekanntmachung des Hinweises auf die Patenterteilung: **09.09.2009**
(21) Anmeldenummer: 06110724.9
(22) Anmeldetag: 06.03.2006
(51) Int. Cl.: H04N 1/191, H04N 1/047

(54) **Systeme zur Ausbildung von Rasterpunkten**
System for forming of dots
Système de formation de points

(30) Priorität: 11.03.2005 DE 102005011312
(43) Veröffentlichungstag der Anmeldung: 27.09.2006
(60) Teilanmeldung: 09166801.2
(73) Patentinhaber: Koenig & Bauer Aktiengesellschaft, 97080 Würzburg (DE)
(72) Erfinder: Diederichs, Carsten, 32657 Lemgo (DE)

(56) Entgegenhaltungen:
- DE-A1- 2 852 315
- DE-A1- 3 213 573
- DE-A1- 10 116 250
- DE-A1- 10 253 654
- DE-A1- 19 743 943
- DE-A1- 19 815 165
- DE-B- 1 112 407
- US-A- 5 535 672
- US-A- 5 767 887

## Beschreibung

Die Erfindung betrifft ein System zur Ausbildung von Rasterpunkten gemäß dem Oberbegriff des Anspruchs 1.

In der Reproduktionstechnik sind Rasterverfahren bekannt, die entlang von Linien eines Gitternetzes Rasterpunkte in einer z. B. amplitudenmodulierten oder frequenzmodulierten Rasterung erzeugen, wobei die Rasterpunkte z. B. kreisförmig, quadratisch oder elliptisch geformt sein können. Bei einer amplitudenmodulierten Rasterung, die auch autotypische Rasterung genannt wird, haben die einzelnen Rasterpunkte jeweils den gleichen Abstand voneinander, jedoch unterscheiden sich die Rasterpunkte in der Größe ihrer jeweiligen, in der Rasterebene liegenden Fläche, wobei die unterschiedlichen Flächen je nach der verwendete Rasterpunktform durch eine Variation des Durchmessers der Rasterpunkte hervorgerufen sein können. Bei der frequenzmodulierten Rasterung ist die Größe der Fläche der einzelnen Rasterpunkte gleich, jedoch haben die Rasterpunkte einen unterschiedlichen Abstand voneinander. Derartige Rasterverfahren sind z. B. in dem Fachbuch "Handbuch der Printmedien" von Helmut Kipphan, erschienen 2000 im Springer-Verlag, ISBN 3-540-66941-8, auf den Seiten 92 bis 102, 498, 499, 528 bis 532 und 540 beschrieben. Aus diesem Fachbuch ist auch bekannt, zur Vermeidung von Interferenz-Effekten, die durch eine Überlagerung periodischer Strukturen entstehen können, d. h. zur Vermeidung sogenannter Moire-Erscheinungen, beim Übereinanderdruck mehrerer jeweils aus Rasterstrukturen bestehender Farbauszüge die einzelnen am Gesamtbild beteiligten Rasterstrukturen jeweils unter einem Verdrehwinkel gegeneinander zu versetzen, wobei jede am Gesamtbild beteiligte Rasterstruktur einen Rasterwinkel aufweist, wobei der Rasterwinkel z. B. nach DIN 16547 (in der derzeit geltenden Ausgabe vom Dezember 1983) in einem Vollkreis ausgehend von einer vertikalen Stellung im Uhrzeigersinn gemessen wird.

Darüber hinaus ist aus der Patentliteratur folgendes bekannt:

Die DE 198 15 165 A1 beschreibt ein Verfahren zur Gravur von Druckformen, wobei zur Minimierung störender Moires mindestens ein Gravurraster gegenüber den anderen Gravurrastern eines Farbsatzes auf dem Druckzylinder versetzt graviert wird. Dabei kann vorgesehen sein, dass der Gravierbeginn zur Gravur des versetzten Gravurrasters um eine Vektorkomponente des Startvektors in Umfangsrichtung des Druckzylinders verzögert wird. Zu demselben Farbsatz gehörende, jedoch jeweils unterschiedliche Druckfarben druckende Druckformen weisen somit zueinander versetzte Gravurraster auf.

Die DE 101 16 250 A1 beschreibt ein Verfahren zur Durchführung einer Liniengravur mit wenigstens einem Gravierstichel zur Erstellung einer Druckform für den Tiefdruck. Dabei wird ein Abstand zweier einander benachbarter Gravurlinien bereichsweise nach der zu gravierenden Information oder des zu gravierenden Objektes ausgewählt und eingestellt wird. Damit ist der Abstand zweier einander benachbarter, auf derselben Druckform ausgebildeter Gravurlinien variabel.

Die DE 28 52 315 A1 beschreibt ein elektronisches Verfahren zur Herstellung von Rasterauszügen unter Verwendung von Rasterscannern, wobei zur Erzeugung unterschiedlicher Dichten unterschiedliche Punktabstände bei gleich bleibender Punktgröße verwendet werden, wobei Rasterweitensprünge variiert werden können.

Die DE 1 112 407 B beschreibt ein Rasterungsverfahren für die Herstellung eines Druckformensatzes für den Mehrfarbendruck, wobei die Rasterelemente zeitlich nacheinander punkt- und zeilenweise durch Gravierung oder Belichtung elektromechanisch oder elektrooptisch erzeugt werden, wobei Rastersorten verwendet werden, bei denen sich sowohl die Zeilenabstände (Vorschubschritte) in den verschiedenen Rastern eines Farbauszugsatzes zueinander als auch die Rasterpunktabstände innerhalb der Zeilen dieses Rastersatzes zueinander wie kleine ganze Zahlen, vorzugsweise 2, 3, 4, verhalten, und wobei die Anzahl der Rasterelemente pro Flächeneinheit bei allen Rastern eines Satzes annähernd erhalten bleibt. Es kann auch vorgesehen sein, dass ein Rastersatz verwendet wird, bei dem in wenigstens zwei Rastern die Rasterelemente einer Zeile auf Lücke in bezug auf die Rasterelemente der beiden Nachbarzeilen stehen. Dadurch wird bei übereinander zu druckenden Rastern der an diesem Mehrfarbendruck beteiligten Druckformen ein Moireeffekt möglichst vermieden.

Die DE 197 43 943 A1 betrifft eine Druckmaschine mit einem Formzylinder und mit einer Bebilderungsvorrichtung mit einem entlang der Mantelfläche des Formzylinders auf einer im wesentlichen zur Längsachse des Formzylinders parallelen Traversierachse traversierenden, von einer Antriebseinrichtung angetriebenen Druckkopf und mit einer Vorrichtung zur Korrektur von während des Traversierens auftretenden Fehlern bei der Bebilderung des Formzylinders, wobei auf dem Druckkopf ein Laser oder eine Anordnung von mehreren Lasern angeordnet sein kann. Ein Encoder erfasst eine Winkelposition des Formzylinders, wobei das Signal des Encoders für eine Phasenkorrektur herangezogen wird, wobei die Phasenkorrektur von der Bebilderungsvorrichtung auszubildende Bildpunkte betrifft.

Die DE 32 13 573 A1 betrifft ein Verfahren zum direkten Herstellen einer Halbtonplatte von einem Originalbild mit einer kontinuierlichen Abstufung zur Anwendung bei einer Bildreproduziermaschine, aufweisend folgende Verfahrensschritte: a) Es wird eine Halbton-Punktfläche in Bildelemente zerlegt, abhängig von einem Rasterwinkel. b) Die Adressenzahlen der Bildelemente der zerlegten Halbton-Punktflächen werden adressiert. c) Die Daten für die Halbton-Punktflächen-Raten und die Gestalten der Halbton-Punktmuster werden in Adressen von Speichern gespeichert. d) Es wird einer der Speicher ausgewählt. e) Die Daten aus dem ausgewählten Speicher werden parallel herausgelesen und f) die Belichtungs-Lichtstrahlen werden entsprechend geregelt, wobei mehrere Belichtungs-Lichtstrahlen mittels einer Linse auf einen gemeinsamen Auftreffpunkt auf einem lichtempfindlichen Material fokussiert sind.

Die DE 102 53 654 A1 betrifft ein Verfahren zum Herstellen von lösch- und wiederbebilderbaren Tiefdruckformen, bei dem ein mit einem Raster von definierten Vertiefungen und gleichmäßig hohen Stegen versehenes Substrat bereitgestellt wird und in den Vertiefungen zur Ausbildung eines Rasters von Näpfchen, die auf die Tonwerte der Druckvorlage abgestimmt sind, Strukturen aus mindestens einem wieder entfernbaren Bebilderungsmaterial erzeugt werden. Für die Tiefdruckformen sind verschiedene, auch stochastisch verteilte Vertiefungsraster wählbar.

Die US 5,535,672 A beschreibt ein Verfahren zur Druckformherstellung mittels eines Lasers, bei dem auf der Druckform in mehreren parallel nebeneinander angeordneten Spalten jeweils eine Reihe von parallelogrammförmigen Vertiefungen ausgebildet wird, bei dem in benachbarten Spalten ausgebildete Vertiefungen mit ihrer sich jeweils ih Spaltenweite erstreckenden Kante nicht fluchtend, sondern jeweils zueinander versetzt ausgebildet werden.

Die US 5,767,887 A betrifft ein System zum Plotten eines mehrfarbigen grafischen Bildes, wobei mehrere Laser unterschiedlicher Lichtfarbe vorgesehen sind, wobei die Laser auf einem auf einer drehbaren Trommel angeordneten Bildträger durch eine Bündelung ihrer jeweiligen Lichtstrahlen in einem in Axialrichtung der Trommel traversierenden Bebilderungskopf einen gemeinsamen Bildpunkt ausbilden, um das mehrfarbige Bild in einem einzigen Arbeitsgang zu erstellen.

Der Erfindung liegt die Aufgabe zugrunde, ein System zur Ausbildung von Rasterpunkten zu schaffen, wobei Fehlpositionierungen von Rasterpunkten korrigierbar sind und/oder wobei Registerfehlern und/oder Moire-Erscheinungen entgegengewirkt wird.

Die Aufgabe wird erfindungsgemäß durch die Merkmale des Anspruchs 1 gelöst.

Die mit der Erfindung erzielbaren Vorteile bestehen insbesondere darin, dass durch die wahlfreie Festlegung der Startposition mindestens einer Rasterlinie einzeln und unabhängig von der Startposition einer anderen Rasterlinie ein beliebig konfigurierbares Gittemetz geschaffen wird, mit dem eine durch eine Relativbewegung zwischen den Ausgabeelementen und der Fläche verursachte Verzerrung von auf einer Fläche auszubildenden Rasterpunkten entzerrt und damit korrigiert werden kann. Insbesondere kann das vorgeschlagene System zur Ausbildung von Rasterpunkten bei der Ausführung eines bildgebenden Bearbeitungsverfahrens parallelogrammförmige oder trapezförmige Verzerrungen eines rechteckförmigen Flächenstücks korrigieren sowie Registerfehler, insbesondere Farbregisterfehler, und/oder Moire-Erscheinungen im Mehrfarbendruck vermeiden. Die Vermeidung dieser Fehler führt z. B. bei einem herzustellenden Druckerzeugnis zu einer Unterdrückung unerwünschter Farbschwankungen und damit zu einer besseren Qualität. Registerfehlern und/oder Moire-Erscheinungen wird auch dadurch in vorteilhafter Weise entgegengewirkt, dass Rasterpunkte entlang einer Rasterlinie in parametrierbaren Abständen anordenbar sind oder dass mindestens ein an einer berechneten Position auf der Rasterlinie auszubildenden Rasterpunkt in einer stochastisch festgelegten Distanz zu der berechneten Position ausgebildet wird.

Ausführungsbeispiele der Erfindung sind in den Zeichnungen dargestellt und werden im Folgenden näher beschrieben.

Es zeigen:
- Fig. 1: eine Fläche mit darauf auszubildenden Rasterpunkten;
- Fig. 2: ein System zur Ausbildung von Rasterpunkten.

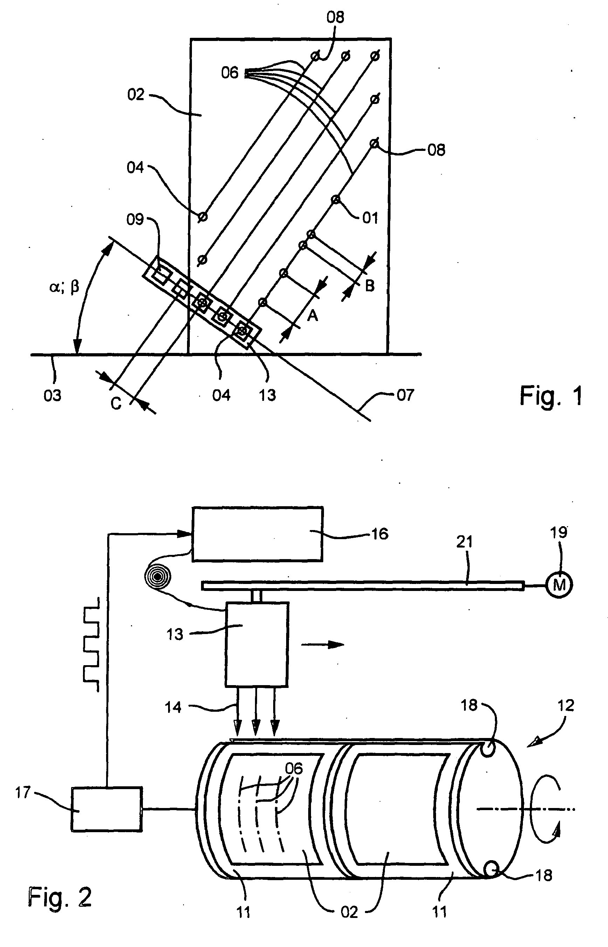

In der Fig. 1 ist beispielhaft und nur schematisch eine Fläche 02, hier eine ebene Fläche 02, mit mindestens einer geradlinigen Seitenbegrenzung 03 dargestellt, wobei die Fläche 02 als ein Träger darauf auszubildender Rasterpunkte 01 dient. Die Fläche 02 kann auch gewölbt ausgebildet sein; sie kann insbesondere hinsichtlich ihrer orthogonal zur geradlinigen Seitenbegrenzung 03 gerichteten Erstreckung konkav oder konvex ausgebildet sein. Die Fläche 02 ist vorzugsweise rechteckförmig ausgebildet. Auf dieser Fläche 02 sind Rasterpunkte 01 entlang mehrerer zueinander parallelen Rasterlinien 06 auszubilden, wobei entlang vorzugsweise jeder Rasterlinie 06 jeweils vorzugsweise mehrere Rasterpunkte 01 auszubilden sind. Die auf der Fläche 02 auszubildenden Rasterpunkte 01 können in ihrer Gesamtheit jede beliebige Konfiguration annehmen und auf der Fläche 02 ungleichmäßig verteilt sein. Unter dem Begriff der Rasterung wird die Ausbildung von Rasterpunkten 01 in einer gitternetzförmigen Struktur verstanden.

Die Rasterpunkte 01 werden jeweils von einem System zur Ausbildung von Rasterpunkten 01 auf der Fläche 02 ausgebildet. Das System zur Ausbildung von Rasterpunkten 01 kann z. B. ein Lasersystem, ein Inkjetsystem, ein unter Ausnutzung eines lichthydraulischen Effektes Rasterpunkte 01 ausbildendes System, ein Belichter zur Belichtung von Druckformen oder ein beliebiges anderes Rasterpunkte 01 ausbildendes System sein, wobei das System zur Ausbildung von Rasterpunkten 01 ein bildgebendes Bearbeitungsverfahren ausführt, wobei das Bearbeitungsverfahren hinsichtlich der Fläche 02 vorzugsweise berührungslos, d. h. ohne direkten Kontakt mit der Fläche 02 arbeitet.

In der bevorzugten Ausführung ist das System zur Ausbildung von Rasterpunkten 01, wie in der Fig. 2 schematisch dargestellt, als ein Bebilderungssystem zur Bebilderung einer Fläche 02 auf einer Druckform 11 ausgebildet, insbesondere zur Bebilderung einer Fläche 02 einer auf der Mantelfläche eines Formzylinders 12 einer Druckmaschine angeordneten Druckform 11. Die Druckmaschine arbeitet z. B. in einem Flachdruckverfahren, insbesondere in einem Offsetdruckverfahren. In der Druckmaschine können mehrere vorzugsweise gleichartige Systeme zur vorzugsweise gleichzeitigen Ausbildung von Rasterpunkten 01 auf voneinander verschiedenen Flächen 02 vorgesehen sein. Es kann vorgesehen sein, dass ein durch die Druckmaschine transportierter Bedruckstoff, z. B. eine Materialbahn oder ein Druckbogen, jeweils z. B. bestehend aus Papier, von mehreren Druckformen 11 bedruckt wird, wobei die mehreren Druckformen 11 den Bedruckstoff nacheinander zur Herstellung eines mehrfarbigen Druckbildes mit sich im Farbton voneinander unterscheidenden Druckfarben bedrucken und somit unterschiedlichen, aber zu demselben Druckbild gehörenden Farbauszügen zugeordnet sind. lm Fall eines derartigen Mehrfarbendrucks sind die jeweiligen Rasterungen der am Druckbild beteiligten Druckformen 11 aufeinander abzustimmen, um Registerfehler, insbesondere Farbfehler, und/oder Moire-Erscheinungen zu vermeiden.

In der vorgenannten bevorzugten Ausführung werden die Rasterpunkte 01 auf der dem Bebilderungssystem zugewandten Fläche 02 der vorzugsweise rechteckförmigen Druckform 11 ausgebildet, wobei die Fläche 02 entsprechend der zylindrischen Mantelfläche des die Druckform 11 tragenden Formzylinders 12 gewölbt ausgebildet ist. Die Druckform 11 ist vorzugsweise biegsam ausgebildet. Bei der Druckform 11 kann es sich auch um eine wiederbeschreibbar ausgebildete Druckform 11 handeln. Auf der Mantelfläche des Formzylinders 12 können sowohl in dessen Axialrichtung als auch in dessen Umfangsrichtung mehrere Druckformen 11 angeordnet sein, z. B. vier oder sechs Druckformen 11 nebeneinander in dessen Axialrichtung und z. B. zwei oder drei hintereinander in dessen Umfangsrichtung. Es kann auch vorgesehen sein, dass auf einer Druckform 11 mehrere, voneinander getrennte Druckbilder durch das Ausbilden von Rasterpunkten 01 auf diesen Druckbildern zugeordneten Flächen 02 auszubilden sind. Die Bebilderung kann innerhalb der Druckmaschine, aber auch außerhalb der Druckmaschine z. B. in einer eigens dafür vorgesehenen Vorrichtung, z. B. in einem Belichter, erfolgen.

Das System zur Ausbildung von Rasterpunkten 01 setzt sich aus mehreren Funktionseinheiten zusammen und weist u. a. einen der Fläche 02 zugewandten Bebilderungskopf 13 auf, wobei dieser Bebilderungskopf 13 zumindest in Axialrichtung des die zu bebildernde Druckform 11 tragenden Formzylinders 12 mittels eines dafür vorgesehenen steuerbaren Antriebs 19 bewegbar ist, wobei der Bebilderungskopf 13 vorzugsweise entlang einer axial zum Formzylinder 12 verlaufenden Traverse 21 verfahrbar ist, wobei der steuerbare Antrieb 19 z. B. als ein Schrittmotor ausgebildet ist.

Der Bebilderungskopf 13 ist z. B. als ein einen Partikelstrom 14 oder eine Welle 14, insbesondere eine elektromagnetische Welle, z. B. Laserlicht 14, emittierendes Ausgabegerät 13 ausgebildet, wobei der auf der Fläche 02 auftreffende Partikelstrom 14 oder die auf der Fläche 02 auftreffende Welle 14, z. B. das emittierte Laserlicht 14, an der Auftreffstelle auf der Fläche 02 z. B. durch ein Auftragen von mit dem Partikelstrom 14 zugeführtem Material oder durch ein Abtragen von Material der Fläche 02 oder durch ein Verändern des Materials der Fläche 02 in seinen optischen Eigenschaften einen Rasterpunkt 01 ausbildet. Die Auftreffstelle auf der Fläche 02 bildet z. B. einen sogenannten Laserspot aus.

Das System zur Ausbildung von Rasterpunkten 01 bildet mit seinem Ausgabegerät 13 die Rasterpunkte 01 in Abhängigkeit von einer Relativbewegung zwischen dem Ausgabegerät 13 und der Fläche 02 aus, wobei die Relativbewegung z. B. durch eine Rotationsbewegung des Formzylinders 12 in Verbindung mit einer vorzugsweise gleichzeitigen Vorschubbewegung des Ausgabegerätes 13 vorzugsweise in Axialrichtung des die zu bebildernde Druckform 11 tragenden Formzylinders 12 gegeben ist. Die Rotationsbewegung des Formzylinders 12 und die Vorschubbewegung des Ausgabegerätes 13 sind in der Fig. 2 durch entsprechende Pfeile angedeutet. Die Abhängigkeit zwischen der Relativbewegung und der Ausbildung von Rasterpunkten 01 besteht darin, dass Rasterpunkte 01 nur dort auf der Fläche 02 ausgebildet werden, wo z. B. das Ausgabegerät 13 mit einer Position auf der Fläche 02 korreliert, d. h. z. B. dort, wo das Ausgabegerät 13 insbesondere lotrecht oder radial beabstandet von der Fläche 02 angeordnet ist. Die Vorschubbewegung des Ausgabegerätes 13 in Axialrichtung des die zu bebildernde Druckform 11 tragenden Formzylinders 12 ist vorzugsweise gleichförmig und konstant.

Der Bebilderungskopf 13 oder das Ausgabegerät 13 weist in Axialrichtung des die zu bebildernde Druckform 11 tragenden Formzylinders 12 vorzugsweise mehrere parallel, d. h. insbesondere auch gleichzeitig arbeitende Kanäle auf (Fig. 1), wobei die Kanäle an ihrer der Fläche 02 zugewandten Seite in Ausgabeelemente 09 zur Ausbildung von Rasterpunkten 01 münden. So sind zur Ausbildung der Ausgabeelemente 09 in Axialrichtung des Formzylinders 12 nebeneinander z. B. mehrere während desselben Bewegungsvorganges jeweils Laserlicht 14 emittierende Austrittsstellen angeordnet, wobei die Ausgabeelemente 09 Laserlicht 14 vorzugsweise gepulst zur Verfügung stellen. Z. B. sind im Ausgabegerät 13 nebeneinander mehrere, z. B. vierzig Laserlicht 14 emittierende, auf die zu bebildernde Druckform 11 gerichtete Austrittsstellen vorgesehen, wobei die Lichtstrahlen des aus den Austrittsstellen austretenden Laserlichts 14 parallel verlaufen. Jede einzelne dieser Austrittsstellen kann z. B. eine die Lichtstrahlen des Laserlichts 14 formende, insbesondere bündelnde optische Einrichtung aufweisen. Die im Ausgabegerät 13 parallel arbeitenden Kanäle können auch Laserlicht 14 leitende Lichtleiter aufweisen. Das Laserlicht 14 kann z. B. von einzelnen oder in einem Array angeordneten Laserdioden erzeugt sein, wobei die Laserdioden in ihrer Lichtemission mit einer zum System gehörenden Steuervorrichtung 16 einzeln und unabhängig voneinander steuerbar sind. Die aus den Austrittsstellen des Ausgabegerätes 13 austretenden Lichtstrahlen sind in Axialrichtung des Formzylinders 12 vorzugsweise in einem Abstand C im Bereich von deutlich weniger als 1 mm, z. B. in einem Abstand C von etwa 10 µm voneinander beabstandet. Dieses entspricht dem Abstand, in dem parallel verlaufende Rasterlinien 06 voneinander beabstandet sind. Die zum System gehörenden Steuervorrichtung 16 kann auch den Antrieb 19 zum Bewegen des Ausgabegerätes 13 steuern, d. h. dessen Vorschubgeschwindigkeit einstellen.

Die Rotationsbewegung des die zu bebildernde Druckform 11 tragenden Formzylinders 12 wird z. B. mit einem vorzugsweise hochauflösenden Encoder 17 erfasst, wobei der Encoder 17 entlang eines Voll kreises einer Messscheibe z. B. fünf tausend oder mehr Striche aufweist, wobei z. B. mit einer PLL-Schaltung (phase-locked loop), d. h. mit einem phasengekoppelten Regelkreis, aus den Signalen des Encoders 17 ein Taktsignal generiert wird, wobei aus dem Taktsignal z. B. bei Kenntnis des Durchmessers des Formzylinders 12 hinsichtlich auf der Fläche 02 auszubildender Rasterpunkte 01 in Umfangsrichtung des Formzylinders 12 eine Ortsposition bestimmbar ist. Der Durchmesser des die zu bebildernde Druckform 11 tragenden Formzylinders 12 beträgt vorzugsweise mehr als 1.000 mm, z. B. etwa 1.200 mm. Die Druckform 11 hat in Umfangsrichtung des Formzylinders 12 eine gestreckte Länge von z. B. etwa 500 mm bis 600 mm. Die PLL-Schaltung ist z. B. derart ausgelegt, dass mit ihr in Umfangsrichtung des Formzylinders 12 die Ortsposition auszubildender Rasterpunkte 01 mit einer Auflösung im Bereich von deutlich weniger als 1 mm, z. B. mit einer Auflösung von 10 µm, bestimmbar ist. Bei einer konstanten Rotationsbewegung des Formzylinders 12 ergibt sich für das Taktsignal eine konstante Frequenz, woraus sich eine gleich bleibende Distanz für die Ortsposition benachbarter, in Umfangsrichtung des Formzylinders 12 auszubildender Rasterpunkte 01 ergibt, wobei diese Distanz zwischen benachbarten Rasterpunkten 01 dem Maß der Auflösung entspricht. Der Encoder 17 weist einen Nullimpuls auf, mit dem das mit dem Encoder 17 generierbare Taktsignal zu einer Absolutposition am Umfang des Formzylinders 12 in Beziehung gesetzt wird. Die Steuervorrichtung 16 des Systems ermittelt damit die Absolutposition von mindestens einem auf der Fläche 02 auszubildenden Rasterpunkt 01, wobei weitere auf der Fläche 02 auszubildende Rasterpunkte 01 relativ zu dieser Absolutposition berechenbar sind. Mit dem Nullsignal sind die Rotationsbewegung des die zu bebildernde Druckform 11 tragenden Formzylinders 12 und das mit dem Encoder 17 generierbare Taktsignal miteinander synchronisierbar. Die Absolutposition am Umfang des Formzylinders 12 kann z. B. durch einen bestimmten im Formzylinder 12 angeordneten, in Axialrichtung des Formzylinders 12 verlaufenden und zumindest ein Ende der zu bebildernden Druckform 11 haltenden Spannkanal 18 gegeben sein, wobei in Umfangsrichtung des Formzylinders 12 auch mehrere Spannkanäle 18 vorgesehen sein können.

Bei der bevorzugten Ausbildung des Ausgabegerätes 13 mit mehreren parallel arbeitenden Kanälen in Axialrichtung des die zu bebildernde Druckform 11 tragenden Formzylinders 12 sowie der Rotationsbewegung des die zu bebildernde Druckform 11 tragenden Formzylinders 12 und der Vorschubbewegung des Ausgabegerätes 13 in Axialrichtung des die zu bebildernde Druckform 11 tragenden Formzylinders 12 bildet das Ausgabegerät 13 auf der Fläche 02 der zu bebildernden Druckform 11 dort entlang von Rasterlinien 06 auszubildende Rasterpunkte 01 entlang einer mehrgängigen, in diesem Fall zylindrischen Schraubenlinie aus, wobei die Anzahl der Gänge der Schraubenlinie der Anzahl der aktivierten Kanäle des Ausgabegerätes 13 entspricht. Diese Relativbewegung zwischen dem Ausgabegerät 13 und der Fläche 02 besteht infolge der Rotationsbewegung des Formzylinders 12 in mehreren sich periodisch wiederholenden Bewegungsvorgängen, da sich die Fläche 02 bei jeder Umdrehung des Formzylinders 12 unter dem nicht mitrotierenden Ausgabegerät 13 hindurchbewegt, wobei das Ausgabegerät 13 mit jedem Bewegungsvorgang entsprechend der Anzahl der aktivierten Kanäle des Ausgabegerätes 13 auf der Fläche 02 Rasterpunkte 01 entlang einer festgelegten Anzahl von Rasterlinien 06 ausbildet. Die Relativbewegung zwischen dem Ausgabegerät 13 und der Fläche 02 weist infolge der Rotationsbewegung des Formzylinders 12 zumindest eine orthogonal zur geradlinigen Seitenbegrenzung 03 der Fläche 02 gerichtete Geschwindigkeitskomponente auf. Die Relativbewegung zwischen dem Ausgabegerät 13 und der Fläche 02 weist aufgrund der Vorschubbewegung des Ausgabegerätes 13 auch eine parallel zur geradlinigen Seitenbegrenzung 03 der Fläche 02 gerichtete Geschwindigkeitskomponente auf. Aufgrund der Vorschubbewegung des Ausgabegerätes 13 bilden die Rasterlinien 06 mit der geradlinigen Seitenbegrenzung 03 der Fläche 02 einen schiefwinkligen Rasterwinkel α aus.

Die z. B. als eine elektronische Rechenschaltung ausgebildete Steuervorrichtung 16 des Systems steuert u. a. den zeitlichen Ablauf zur Ausbildung von Rasterpunkten 01.

Vorzugsweise in Abhängigkeit von dem mit der Rotationsbewegung des Formzylinders 12 korrelierenden Taktsignal des Encoders 17 und der sensorisch erfassten Vorschubbewegung des Ausgabegerätes 13 in Axialrichtung des Formzylinders 12 berechnet die Steuervorrichtung 16 des Systems z. B. mit einem Controller der Steuervorrichtung 16 die jeweiligen Positionen mehrerer auszubildender Rasterpunkte 01, vorzugsweise aller entlang derselben Rasterlinie 06 auszubildender Rasterpunkte 01. Die Steuervorrichtung 16 ist daher vorzugsweise durch Leitungen mit dem Encoder 17 und auch z. B. mit dem Antrieb zur Steuerung der Vorschubbewegung des Ausgabegerätes 13 in Axialrichtung des Formzylinders 12 verbunden.

Insbesondere berechnet diese Steuervorrichtung 16 eine Startposition 04, ab der eine Rasterlinie 06 mit Rasterpunkten 01 auszubilden ist, sodass die Startposition 04 eine Bezugsposition für entlang dieser Rasterlinie 06 nachfolgend auszubildende Rasterpunkte 01 bildet. Die Startposition 04 ergibt sich dort, wo aus einer der Austrittsstellen des Ausgabegerätes 13 austretendes Laserlicht 14 erstmals auf der sich relativ zum Ausgabegerät 13 bewegenden Fläche 02 auftreffen kann, d. h. nachdem z. B. die geradlinige Seitenbegrenzung 03 der Fläche 02 infolge der Rotationsbewegung des Formzylinders 12 die Auftreffstelle des aus der Austrittsstelle des Ausgabegerätes 13 austretenden Laserlichts 14 passiert hat und sich im Anschluss daran in Fortsetzung der Rotationsbewegung des Formzylinders 12 die mit Rasterpunkten 01 zu versehene Fläche 02 an der Austrittsstelle des aus dem Ausgabegerät 13 austretenden Laserlichts 14 entlangbewegt. Ähnliches ergibt sich für Startpositionen 04 von Rasterlinien 06, die erstmals durch die Vorschubbewegung des Ausgabegerätes 13 in Axialrichtung des Formzylinders 12 mit der zu bebildernden Fläche 02 in Deckung gebracht werden.

Im Ausgabegerät 13 sind die Ausgabeelemente 09 des Systems zur Ausbildung von Rasterpunkten 01 vorzugsweise in einer starren Verbauung nebeneinander entlang einer Geraden 07 angeordnet (Fig. 1), wobei die Gerade 07 zu der geradlinigen Seitenbegrenzung 03 der Fläche 02 in einer zu der Fläche 02 parallelen Ebene einen schiefwinkligen Verdrehwinkel β ausbildet, wobei der Verdrehwinkel β vorzugsweise dem Rasterwinkel α entspricht. Der Rasterwinkel α und/oder der Verdrehwinkel β sind jeweils zumindest von der in Richtung der parallel zur geradlinigen Seitenbegrenzung 03 der Fläche 02 gerichteten Geschwindigkeitskomponente abhängig. Die Steuervorrichtung 16 des Systems berechnet die jeweiligen Positionen von entlang derselben Rasterlinie 06 auszubildenden Rasterpunkten 01 z. B. in Abhängigkeit vom Rasterwinkel α und/oder vom Verdrehwinkel β. Vorzugsweise berechnet die Steuervorrichtung 16 des Systems die jeweiligen Positionen von entlang derselben Rasterlinie 06 auszubildenden Rasterpunkten 01 nach jeder Änderung des Rasterwinkels α und/oder des Verdrehwinkels β neu.

Die Steuervorrichtung 16 wählt die Startpositionen 04 von Rasterlinien 06 in Abhängigkeit der Relativbewegung zwischen dem Ausgabegerät 13 und der Fläche 02 und steuert die im Ausgabegerät 13 angeordneten Ausgabeelemente 09 zur Ausbildung von Rasterpunkten 01, z. B. die Laserdioden, insbesondere beim Übereinanderdruck der Rasterungen verschiedener am selben Druckbild beteiligter Farbauszüge zur Vermeidung von Registerfehler, insbesondere Farbfehler, und/oder Moire-Erscheinungen derart, dass bei einer wiederholten Umdrehung des Formzylinders 12, vorzugsweise bei jeder Umdrehung des Formzylinders 12 die Startposition 04 mindestens einer Rasterlinie 06 im Vergleich zu der Startposition 04 einer anderen Rasterlinie 06 mit Bezug auf die geradlinige Seitenbegrenzung 03 der Fläche 02 versetzt ist. Im Fall mehrerer nebeneinander angeordneter Ausgabeelemente 09, z. B. Laserdioden, im Ausgabegerät 13 legt die Steuervorrichtung 16 mindestens für eine Rasterlinie 06, vorzugsweise für jede Rasterlinie 06 deren Startposition 04 einzeln und vorzugsweise unabhängig von der Startposition 04 einer anderen Rasterlinie 06 fest, sodass mehrere nebeneinander angeordnete Ausgabeelemente 09 während desselben Bewegungsvorganges zu unterschiedlichen Zeitpunkten mit der Ausbildung von Rasterpunkten 01 auf der Fläche 02 beginnen. Beginnend mit der den Anfang einer Rasterlinie 06 definierenden Startposition 04 werden nachfolgend Rasterpunkte 01 entlang dieser Rasterlinie 06 ausgebildet, wobei die Startposition 04 einen Bezugspunkt für die nachfolgend entlang dieser Rasterlinie 06 auszubildenden Rasterpunkte 01 bildet. Es ist vorteilhaft, das die Steuervorrichtung 16 des Systems die jeweiligen Positionen aller entlang derselben Rasterlinie 06 auszubildenden Rasterpunkte 01 berechnet. In jedem Bewegungsvorgang können durch die mehreren nebeneinander angeordneten Ausgabeelemente 09 gleichzeitig Rasterpunkte 01 entlang mehrerer zueinander parallel verlaufender Rasterlinien 06 auf derselben Fläche 02 ausgebildet werden, wobei die Ausbildung der Rasterpunkte 01 entlang jeder Rasterlinie 06 von der Steuervorrichtung 16 des Systems individuell gesteuert sein kann.

Die Steuervorrichtung 16 des Systems unterteilt einen Abstand A zwischen den Positionen benachbarter, entlang derselben Rasterlinie 06 auszubildender Rasterpunkte 01 in eine endliche Anzahl von Teilstrecken. Vorzugsweise unterteilt die Steuervorrichtung 16 des Systems die jeweiligen Abstände A zwischen den Positionen benachbarter Rasterpunkte 01 aller entlang derselben Rasterlinie 06 auszubildenden Rasterpunkte 01 in dieselbe Anzahl von Teilstrecken. Dabei sind die den Abstand A zwischen den Positionen benachbarter Rasterpunkte 01 unterteilenden Teilstrecken vorzugsweise äquidistant. Die Steuervorrichtung 16 des Systems verändert den Abstand A zwischen den Positionen benachbarter Rasterpunkte 01, um einer unerwünschten Verzerrung von auf einer Fläche 02 auszubildenden Rasterpunkten 01 und/oder Registerfehlern und/oder Moire-Erscheinungen entgegenzuwirken, indem sie wahlweise diesen Abstand A durch ein Hinzufügen von mindestens einer weiteren Teilstrecke zu den bereits vorhandenen Teilstrecken vergrößert oder diesen Abstand A durch ein Weglassen von mindestens einer Teilstrecke von den vorhandenen Teilstrecken verkleinert.

Die Steuervorrichtung 16 des Systems erzeugt eine Länge der Teilstrecken, die den Abstand A zwischen den Positionen benachbarter, entlang derselben Rasterlinie 06 auszubildender Rasterpunkte 01 unterteilen, z. B. aus einem mit einer orthogonal zur geradlinigen Seitenbegrenzung 03 der Fläche 02 gerichteten Geschwindigkeitskomponente des Bewegungsvorgangs korrelierenden Signal, insbesondere aus dem mit dem Encoder 17 generierbaren Taktsignal, wobei dieses Taktsignal vorzugsweise aus sich periodisch wiederholenden Impulsen besteht, wobei z. B. bei jeder Umdrehung des Formzylinders 12 eine Vielzahl von Impulsen erzeugt werden. Die Zahl der Impulse pro Umdrehung des Formzylinders 12 liegt vorzugsweise bei mehreren Millionen Impulsen, z. B. bei mehr als zehn Millionen Impulsen, sodass bereits nach einer Drehung des Formzylinders 12 um ein winziges, im Nanometerbereich liegendes Bogenstück entlang seines Umfangs vom Encoder 17 ein Impuls generiert wird. Eine Folge von aufeinanderfolgenden Impulsen wird mit einem digitalen Zähler, insbesondere mit einem hochauflösenden Zähler, bis zu einem vorbestimmten, d. h. voreingestellten, vorzugsweise parametrierbaren Wert aufsummiert, wobei die Summe der bis zu diesem Wert aufgelaufenen Impulse eine auch Digit genannte Einheit bildet, wobei jeder auf diese Weise gebildete Digit mit einer den Abstand A zwischen den Positionen benachbarter, entlang derselben Rasterlinie 06 auszubildender Rasterpunkte 01 unterteilenden Teilstrecke korreliert. Die Länge dieser einzelnen Teilstrecken kann z. B. 100 nm oder weniger betragen. Durch ein Inkrementieren oder Dekrementieren um ein Digit verlängert oder verkürzt die Steuervorrichtung 16 des Systems den Abstand A zwischen den Positionen benachbarter, entlang derselben Rasterlinie 06 auszubildender Rasterpunkte 01 jeweils um eine dieser Teilstrecken.

Damit ist der Abstand A zwischen den Positionen benachbarter, entlang derselben Rasterlinie 06 auszubildender Rasterpunkte 01 parametrierbar und in weiten Grenzen festlegbar sowie veränderbar. Durch die Veränderbarkeit des Abstandes A zwischen den Positionen benachbarter, entlang derselben Rasterlinie 06 auszubildender Rasterpunkte 01 kann die Steuervorrichtung 16 des Systems andernfalls ohne diese Maßnahme am herzustellenden Druckerzeugnis sichtbar werdende Registerfehler, insbesondere Farbfehler, und/oder Moire-Erscheinungen korrigieren. Die Steuervorrichtung 16 des Systems ermittelt vorzugsweise auch eine Endposition 08 mindestens einer, vorzugsweise jeder Rasterlinie 06, d. h. diejenige Position, an der die Ausbildung von Rasterpunkten 01 entlang dieser Rasterlinie 06 endet, sodass mit einer Festlegung von Startposition 04 und Endposition 08 einer Rasterlinie 06 diese Rasterlinie 06 als eine gerade oder gewölbte Linie mit einer definierten Länge festgelegt ist. Eine Veränderung des Abstandes A zwischen den Positionen benachbarter, entlang derselben Rasterlinie 06 auszubildender Rasterpunkte 01 beeinflusst vorzugsweise auch die Startposition 04 und/oder die Endposition 08 dieser Rasterlinie 06, d. h. die Länge dieser Rasterlinie 06 wird je nach dem Vorzeichen der Veränderung des Abstandes A gedehnt oder gestaucht.

Das System zur Ausbildung von Rasterpunkten 01 ist mit der Steuervorrichtung 16 des Systems in der Lage, einen mit einer Startposition 04 einer Rasterlinie 06 korrelierenden Rasterpunkt 01 im Vergleich zu dem mit der Startposition 04 einer anderen Rasterlinie 06 korrelierenden Rasterpunkt 01 zeitlich oder um eine Strecke versetzt auszubilden. Dabei kann das System den mit der Startposition 04 einer Rasterlinie 06 korrelierenden Rasterpunkt 01 im Vergleich zu dem mit der Startposition 04 der anderen Rasterlinie 06 korrelierenden Rasterpunkt 01 zeitlich voreilend oder nacheilend ausbilden. Alternativ oder zusätzlich kann das System den mit der Startposition 04 einer Rasterlinie 06 korrelierenden Rasterpunkt 01, der im Vergleich zu dem mit der Startposition 04 einer anderen Rasterlinie 06 korrelierenden Rasterpunkt 01 versetzt auszubilden ist, ausgehend von der Startposition 04 des auszubildenden Rasterpunktes 01 um die vorgenannte Strecke versetzt ausbilden, wobei die Strecke den Abstand A zwischen der Startposition 04 des auszubildenden Rasterpunktes 01 und einer Position eines entlang dieser Rasterlinie 06 nachfolgenden Rasterpunktes 01 verkürzt oder verlängert. Dabei besteht die Strecke, die den Abstand A zwischen der Startposition 04 des auszubildenden Rasterpunktes 01 und einer Position eines entlang dieser Rasterlinie 06 nachfolgenden Rasterpunktes 01 verkürzt oder verlängert, vorzugsweise aus einer Anzahl von den Abstand A zwischen den Positionen benachbarter Rasterpunkte 01 unterteilenden Teilstrecken.

In einer vorteilhaften Ausführung des gefundenen Systems zur Ausbildung von Rasterpunkten 01 bildet das System mindestens einen an einer berechneten Position auf der Rasterlinie 06 auszubildenden Rasterpunkt 01 in einer stochastisch festgelegten Distanz B zu der berechneten Position aus. Dabei bildet das System den an der berechneten Position auf der Rasterlinie 06 auszubildenden Rasterpunkt 01 ausgehend von dessen berechneter Position in der stochastisch festgelegten Distanz B entlang der Rasterlinie 06 voreilend oder nacheilend aus, wobei die Generierung der stochastisch festgelegten Distanz B vorzugsweise die Ausbildung einer Vorzugsrichtung vermeidet. Ein Maximalwert der stochastisch festgelegten Distanz B beträgt vorzugsweise höchstens ein Drittel des Abstandes A zwischen den berechneten Positionen entlang der Rasterlinie 06 benachbarter Rasterpunkte 01. Die Steuervorrichtung 16 des Systems ermittelt die stochastisch festgelegte Distanz B in ihrer Länge und/oder ihrer Richtung z. B. mit einem Zufallsgenerator. Wenn der Steuervorrichtung 16 des Systems die Länge mindestens einer Rasterlinie 06 bekannt ist, z. B. dadurch, dass die Steuervorrichtung 16 des Systems aus der jeweils berechneten Startposition 04 und Endposition 08 dieser Rasterlinie 06 deren Länge ermittelt, kann die Steuervorrichtung 16 des Systems diese Länge der Rasterlinie 06 vorzugsweise gleichmäßig, z. B. in äquidistante Teilstrecken unterteilen und nach jeder dieser Teilstrecken oder sich wiederholend nach einer bestimmten, vorzugsweise voreingestellten Anzahl dieser Teilstrecken einen auf dieser Rasterlinie 06 auszubildenden Rasterpunkt 01 in der stochastisch festgelegten Distanz B zu dessen berechneter Position ausbilden.

Die Steuervorrichtung 16 des Systems kann in einem zur Druckmaschine gehörenden Leitstand implementiert sein. Ein Auftreten einer unerwünschten Verzerrung von auf einer Fläche 02 auszubildenden Rasterpunkten 01 und/oder eines Registerfehlers und/oder einer Moire-Erscheinung können jeweils mit einem sensorischen System, z. B. mit mindestens einem auf den von Rasterpunkten 01 der Fläche 02 bedruckten Bedruckstoff gerichteten, vorzugsweise in der Druckmaschine angeordneten Bildsensor, z. B. einer Kamera mit mindestens einem CCD-Chip, insbesondere einer derartigen Farbkamera, in Verbindung mit einer Signale des Bildsensors auswertenden Bildauswertevorrichtung erfasst und ausgewertet werden, wobei ein Auswerteergebnis der Bildauswertevorrichtung an die Steuervorrichtung 16 des Systems zur Ausbildung von Rasterpunkten 01 geleitet wird. Auf diese Weise entsteht ein Regelkreis, in welchem die Steuervorrichtung 16 des Systems zur Ausbildung von Rasterpunkten 01 in Abhängigkeit von einer von der Bildauswertevorrichtung bereitgestellten Führungsgröße, nämlich dem Auswerteergebnis der Bildauswertevorrichtung, die Rasterung einer Fläche 02 nachführt.

### Bezugszeichenliste

- 01: Rasterpunkt
- 02: Fläche
- 03: Seitenbegrenzung
- 04: Startposition
- 05: -
- 06: Rasterlinie
- 07: Gerade
- 08: Endposition
- 09: Ausgabeelement
- 10: -
- 11: Druckform
- 12: Formzylinder
- 13: Bebilderungskopf, Ausgabegerät
- 14: Partikelstrom, Welle, Laserlicht
- 15: -
- 16: Steuervorrichtung
- 17: Encoder
- 18: Spannkanal
- 19: Antrieb
- 20: -
- 21: Traverse

- A: Abstand
- B: Distanz
- C: Abstand

- α: Rasterwinkel
- β: Verdrehwinkel

## Patentansprüche

1. System zur Ausbildung von Rasterpunkten (01), aufweisend ein Ausgabegerät (13) mit Ausgabeelementen (09) zur Ausbildung der Rasterpunkte (01) und eine Steuervorrichtung (16), wobei das Ausgabegerät (13) die Rasterpunkte (01) auf einer Fläche (02) ausbildet, wobei das Ausgabegerät (13) die Rasterpunkte (01) auf der Fläche (02) an Positionen entlang von zueinander parallelen Rasterlinien (06) jeweils beginnend mit einer Startposition (04) ausbildet, wobei die Steuervorrichtung (16) die jeweiligen Positionen mehrerer entlang derselben Rasterlinie (06) auszubildender Rasterpunkte (01) vor deren Ausbildung berechnet, **dadurch gekennzeichnet, dass** die Ausgabeelemente (09) entlang einer Geraden (07) angeordnet sind, wobei mehrere entlang der Geraden (07) angeordnete Ausgabeelemente (09) bei der Ausbildung von Rasterpunkten (01) auf der Fläche (02) parallel arbeiten, wobei die Steuervorrichtung (16) die entlang der Geraden (07) angeordneten Ausgabeelemente (09) einzeln und unabhängig voneinander steuert.

2. System nach Anspruch 1, **dadurch gekennzeichnet, dass** die Steuervorrichtung (16) die Startposition (04) mindestens einer Rasterlinie (06), entlang der eines der entlang der Geraden (07) angeordneten Ausgabeelemente (09) mindestens einen Rasterpunkt (01) ausbildet, einzeln und unabhängig von der Startposition (04) einer anderen Rasterlinie (06), entlang der ein anderes der entlang der Geraden (07) angeordneten Ausgabeelemente (09) mindestens einen Rasterpunkt (01) ausbildet, festlegt.

3. System nach Anspruch 1, **dadurch gekennzeichnet, dass** die Steuervorrichtung (16) eine Länge mindestens einer der Rasterlinien (06) in Teilstrecken unterteilt, wobei das Ausgabegerät (13) nach einer voreingestellten Anzahl dieser Teilstrecken einen auf dieser Rasterlinie (06) auszubildenden Rasterpunkt (01) in einer stochastisch festgelegten Distanz (B) zu dessen berechneter Position ausbildet.

4. System nach Anspruch 1, **dadurch gekennzeichnet, dass** die Steuervorrichtung (16) einen Abstand (A) zwischen den berechneten Positionen benachbarter, entlang derselben Rasterlinie (06) auszubildender Rasterpunkte (01) in eine endliche Anzahl von Teilstrecken unterteilt.

5. System nach Anspruch 4, **dadurch gekennzeichnet, dass** die Steuervorrichtung (16) den Abstand (A) zwischen den berechneten Positionen benachbarter Rasterpunkte (01) in Abhängigkeit von der Relativbewegung zwischen den Ausgabeelementen (09) und der Fläche (02) wahlweise durch ein Hinzufügen von mindestens einer weiteren Teilstrecke zu den vorhandenen Teilstrecken vergrößert oder durch ein Weglassen von mindestens einer Teilstrecke von den vorhandenen Teilstrecken verkleinert.

6. System nach Anspruch 1, **dadurch gekennzeichnet, dass** das Ausgabegerät (13) entlang von verschiedenen Rasterlinien (06) deren jeweilige Rasterpunkte (01) in Abhängigkeit von einer Relativbewegung zwischen Ausgabeelementen (09) des Ausgabegerätes (13) und der Fläche (02) ausbildet.

7. System nach Anspruch 6, **dadurch gekennzeichnet, dass** das Ausgabegerät (13) In demselben Bewegungsvorgang der Relativbewegung zwischen den Ausgabeelementen (09) und der Fläche (02) Rasterpunkte (01) entlang verschiedener Rasterlinien (06) ausbildet.

8. System nach Anspruch 7**, dadurch gekennzeichnet, dass** die Steuervorrichtung (16) die Startposition (04) mindestens einer dieser Rasterlinien (06) im Vergleich zu der Startposition (04) einer der anderen Rasterlinien (06) versetzt festlegt.

9. System nach Anspruch 6, **dadurch gekennzeichnet, dass** die Relativbewegung zwischen den Ausgabeelementen (09) und der Fläche (02) in mehreren sich periodisch wiederholenden Bewegungsvorgängen besteht.

10. System nach Anspruch 6, **dadurch gekennzeichnet, dass** das Ausgabegerät (13) mit jedem Bewegungsvorgang auf der Fläche (02) Rasterpunkte (01) entlang einer festgelegten Anzahl von Rasterlinien (06) ausbildet.

11. System nach Anspruch 9, **dadurch gekennzeichnet, dass** die Steuervorrichtung (16) in jedem der sich wiederholenden Bewegungsvorgänge hinsichtlich der Relativbewegung zwischen den Ausgabeelementen (09) und der Fläche (02) die Startposition (04) mindestens einer Rasterlinie (06) einzeln und unabhängig von der Startposition (04) einer anderen Rasterlinie (06) festlegt.

12. System nach Anspruch 6, **dadurch gekennzeichnet, dass** die Relativbewegung zwischen den Ausgabeelementen (09) und der Fläche (02) zumindest eine orthogonal zu einer geradlinigen Seitenbegrenzung (03) der Fläche (02) gerichtete Geschwindigkeitskomponente aufweist.

13. System nach Anspruch 6, **dadurch gekennzeichnet, dass** die Relativbewegung zwischen den Ausgabeelementen (09) und der Fläche (02) eine parallel zu einer geradlinigen Seitenbegrenzung (03) der Fläche (02) gerichtete Geschwindigkeitskomponente aufweist.

14. System nach Anspruch 1, **dadurch gekennzeichnet, dass** die Rasterlinien (06) mit einer geradlinigen Seitenbegrenzung (03) der Fläche (02) einen schiefwinkligen Rasterwinkel (α) ausbilden.

15. System nach Anspruch 1, **dadurch gekennzeichnet, dass** die Gerade (07) zu einer geradlinigen Seitenbegrenzung (03) der Fläche (02) in einer zu der Fläche (02) parallelen Ebene einen schiefwinkligen Verdrehwinkel (β) ausbildet.

16. System nach Anspruch 14 oder 15, **dadurch gekennzeichnet, dass** der Rasterwinkel (α) und/oder der Verdrehwinkel (β) jeweils zumindest von der in Richtung der parallel zu einer geradlinigen Seitenbegrenzung (03) der Fläche (02) gerichteten Geschwindigkeitskomponente abhängig sind.

17. System nach Anspruch 14 oder 15, **dadurch gekennzeichnet, dass** Rasterwinkel (α) und der Verdrehwinkel (β) einander entsprechen.

18. System nach Anspruch 14 oder 15**, dadurch gekennzeichnet, dass** die Steuervorrichtung (16) die jeweiligen Positionen von entlang derselben Rasterlinie (06) auszubildenden Rasterpunkten (01) in Abhängigkeit vom Rasterwinkel (α) und/oder vom Verdrehwinkel (β) berechnet.

19. System nach Anspruch 14 oder 15, **dadurch gekennzeichnet, dass** die Steuervorrichtung (16) die jeweiligen Positionen von entlang derselben Rasterlinie (06) auszubildenden Rasterpunkten (01) nach jeder Änderung des Rasterwinkels (α) und/oder des Verdrehwinkels (β) neu berechnet.

20. System nach Anspruch 1, **dadurch gekennzeichnet, dass** die Steuervorrichtung (16) die jeweiligen Positionen aller entlang derselben Rasterlinie (06) auszubildenden Rasterpunkte (01) berechnet.

21. System nach Anspruch 1, **dadurch gekennzeichnet, dass** die Steuervorrichtung (16) eine Absolutposition mindestens eines auf der Fläche (02) auszubildenden Rasterpunktes (01) ermittelt.

22. System nach Anspruch 21, **dadurch gekennzeichnet, dass** die Steuervorrichtung (16) weitere auf der Fläche (02) auszubildende Rasterpunkte (01) relativ zu der ermittelten Absolutposition berechnet.

23. System nach Anspruch 4, **dadurch gekennzeichnet, dass** die Steuervorrichtung (16) die jeweiligen Abstände (A) zwischen den Positionen benachbarter Rasterpunkte (01) aller entlang derselben Rasterlinie (06) auszubildenden Rasterpunkte (01) in dieselbe Anzahl von Teilstrecken unterteilt.

24. System nach Anspruch 4, **dadurch gekennzeichnet, dass** die den Abstand (A) zwischen den Positionen benachbarter Rasterpunkte (01) unterteilenden Teilstrecken äquidistant sind.

25. System nach Anspruch 4, **dadurch gekennzeichnet, dass** die Steuervorrichtung (16) eine Länge der den Abstand (A) zwischen den Positionen benachbarter, entlang derselben Rasterlinie (06) auszubildender Rasterpunkte (01) unterteilenden Teilstrecken aus einem mit einer orthogonal zu einer geradlinigen Seitenbegrenzung (03) der Fläche (02) gerichteten Geschwindigkeitskomponente des Bewegungsvorgangs korrelierenden Signal erzeugt.

26. System nach Anspruch 25, **dadurch gekennzeichnet, dass** die Steuervorrichtung (16) das mit der orthogonal zur geradlinigen Seitenbegrenzung (03) der Fläche (02) gerichteten Geschwindigkeitskomponente des Bewegungsvorgangs korrelierende Signal mit einem Encoder (17) erzeugt.

27. System nach Anspruch 26, **dadurch gekennzeichnet, dass** die Steuervorrichtung (16) aus Signalen des Encoders (17) ein Taktsignal generiert.

28. System nach Anspruch 27, **dadurch gekennzeichnet, dass** die Steuervorrichtung (16) Impulse des vom Encoder (17) generierten Taktsignals mit einem digitalen Zähler bis zu einem voreingestellten Wert aufsummiert, wobei die Summe der bis zu diesem Wert aufgelaufenen Impulse eine Einheit bildet, wobei diese Einheit mit einer den Abstand (A) zwischen den Positionen benachbarter, entlang derselben Rasterlinie (06) auszubildender Rasterpunkte (01) unterteilenden Teilstrecke korreliert.

29. System nach Anspruch 28, **dadurch gekennzeichnet, dass** die Einheit den Abstand (A) zwischen den Positionen benachbarter, entlang derselben Rasterlinie (06) auszubildender Rasterpunkte (01) in Teilstrecken mit einer Länge von 100 nm oder weniger unterteilt.

30. System nach Anspruch 1**, dadurch gekennzeichnet, dass** die Steuervorrichtung (16) eine Endposition (08) mindestens einer Rasterlinie (06) ermittelt.

31. System nach Anspruch 30, **dadurch gekennzeichnet, dass** die Steuervorrichtung (16) durch eine Veränderung des Abstandes (A) zwischen den Positionen benachbarter, entlang derselben Rasterlinie (06) auszubildender Rasterpunkte (01) die Startposition (04) und/oder die Endposition (08) mindestens einer Rasterlinie (06) verändert.

32. System nach Anspruch 1, **dadurch gekennzeichnet, dass** das Ausgabegerät (13) einen mit einer Startposition (04) einer Rasterlinie (06) korrelierenden Rasterpunkt (01) im Vergleich zu dem mit der Startposition (04) einer anderen Rasterlinie (06) korrelierenden Rasterpunkt (01) zeitlich oder um eine Strecke versetzt ausbildet.

33. System nach Anspruch 32, **dadurch gekennzeichnet, dass** das Ausgabegerät (13) den mit der Startposition einer Rasterlinie korrelierenden Rasterpunkt im Vergleich zu dem mit der Startposition (04) der anderen Rasterlinie (06) korrelierenden Rasterpunkt (01) zeitlich voreilend oder nacheilend ausbildet.

34. System nach Anspruch 32, **dadurch gekennzeichnet, dass** das Ausgabegerät (13) den mit der Startposition (04) einer Rasterlinie (06) korrelierenden Rasterpunkt (01), der im Vergleich zu dem mit der Startposition (04) einer anderen Rasterlinie (06) korrelierenden Rasterpunkt (01) versetzt auszubilden ist, ausgehend von der Startposition (04) des auszubildenden Rasterpunktes (01) um die Strecke versetzt ausbildet, wobei die Strecke den Abstand (A) zwischen der Startposition (04) des auszubildenden Rasterpunktes (01) und einer Position eines entlang dieser Rasterlinie (06) nachfolgenden Rasterpunktes (01) verkürzt oder verlängert.

35. System nach Anspruch 34, **dadurch gekennzeichnet, dass** die Strecke, die den Abstand (A) zwischen der Startposition (04) des auszubildenden Rasterpunktes (01) und einer Position eines entlang dieser Rasterlinie (06) nachfolgenden Rasterpunktes (01) verkürzt oder verlängert, aus einer Anzahl von den Abstand (A) zwischen den Positionen benachbarter Rasterpunkte (01) unterteilenden Teilstrecken besteht.

36. System nach Anspruch 3, **dadurch gekennzeichnet, dass** das Ausgabegerät (13) den an der berechneten Position auf der Rasterlinie (06) auszubildenden Rasterpunkt (01) ausgehend von dessen berechneter Position in der stochastisch festgelegten Distanz (B) entlang der Rasterlinie (06) voreilend oder nacheilend ausbildet.

37. System nach Anspruch 3, **dadurch gekennzeichnet, dass** ein Maximalwert der stochastisch festgelegten Distanz (B) höchstens ein Drittel des Abstandes (A) zwischen den berechneten Positionen entlang der Rasterlinie (06) benachbarter Rasterpunkte (01) beträgt.

38. System nach Anspruch 3, **dadurch gekennzeichnet, dass** die Steuervorrichtung (16) die stochastisch festgelegte Distanz (B) mit einem Zufallsgenerator ermittelt.

39. System nach Anspruch 1, **dadurch gekennzeichnet, dass** das Ausgabegerät (13) ein bildgebendes Bearbeitungsverfahren ausführt.

40. System nach Anspruch 39, **dadurch gekennzeichnet, dass** das Bearbeitungsverfahren hinsichtlich der Fläche (02) berührungslos arbeitet.

41. System nach Anspruch 1, **dadurch gekennzeichnet, dass** das System als ein Lasersystem, als ein Inkjetsystem, als ein unter Ausnutzung eines lichthydraulischen Effektes Rasterpunkte (01) ausbildendes System oder als ein Belichter zur Belichtung von Druckformen (11) ausgebildet ist.

42. System nach Anspruch 1, **dadurch gekennzeichnet, dass** das Ausgabegerät (13) Rasterpunkte (01) auf einer rechteckförmigen Fläche (02) ausbildet.

43. System nach Anspruch 1, **dadurch gekennzeichnet, dass** das Ausgabegerät (13) Rasterpunkte (01) auf einer ebenen oder gewölbten Fläche (02) ausbildet.

44. System nach Anspruch 1, **dadurch gekennzeichnet, dass** das Ausgabegerät (13) Rasterpunkte (01) auf der Fläche (02) einer Druckform (11) ausbildet.

45. System nach Anspruch 1, **dadurch gekennzeichnet, dass** das Ausgabegerät (13) Rasterpunkte (01) auf der Fläche (02) einer wiederbeschreibbaren Druckform (11) ausbildet.

46. System nach Anspruch 1, **dadurch gekennzeichnet, dass** das Ausgabegerät (13) Rasterpunkte (01) auf der Fläche (02) einer auf der Mantelfläche eines Formzylinders (12) einer Druckmaschine angeordneten Druckform (11) ausbildet.

47. System nach Anspruch 1, **dadurch gekennzeichnet, dass** das System in einer in einem Flachdruckverfahren arbeitenden Druckmaschine angeordnet ist.

48. System nach Anspruch 1, **dadurch gekennzeichnet, dass** das System in einer in einem Offsetdruckverfahren arbeitenden Druckmaschine angeordnet Ist.

49. System nach Anspruch 1, **dadurch gekennzeichnet, dass** das System in einer einen Bedruckstoff mit mehreren Druckformen (11) bedruckenden Druckmaschine angeordnet ist, wobei die mehreren Druckformen (11) den Bedruckstoff nacheinander zur Herstellung eines mehrfarbigen Druckbildes mit sich im Farbton voneinander unterscheidenden Druckfarben bedrucken.

50. System nach Anspruch 1, **dadurch gekennzeichnet, dass** die Ausgabeelemente (09) einen Partikelstrom (14) oder eine Welle (14) emittieren.

51. System nach Anspruch 1, **dadurch gekennzeichnet, dass** die Ausgabeelemente (09) Laserlicht (14) emittieren.

52. System nach Anspruch 50, **dadurch gekennzeichnet, dass** der von den Ausgabeelementen (09) emittierte Partikelstrom (14) oder die von den Ausgabeelementen (09) emittierte Welle (14) an ihrer jeweiligen Auftreffstelle auf der Fläche (02) einen Rasterpunkt (01) durch ein Auftragen von mit dem Partikelstrom (14) zugeführtem Material oder durch ein Abtragen von Material der Fläche (02) oder durch ein Verändern des Materials der Fläche (02) in seinen optischen Eigenschaften ausbilden.

53. System nach Anspruch 1, **dadurch gekennzeichnet, dass** die Relativbewegung durch eine Vorschubbewegung des Ausgabegerätes (13) in Axialrichtung des die Druckform (11) tragenden Formzylinders (12) gegeben ist.

54. System nach Anspruch 1, **dadurch gekennzeichnet, dass** die Relativbewegung durch eine Rotationsbewegung des Formzylinders (12) gegeben ist.

55. System nach Anspruch 1, **dadurch gekennzeichnet, dass** die Relativbewegung durch eine Vorschubbewegung des Ausgabegerätes (13) in Axialrichtung des die Druckform (11) tragenden Formzylinders (12) zusammen mit einer gleichzeitigen Rotationsbewegung des Formzylinders (12) gegeben ist.

56. System nach Anspruch 1, **dadurch gekennzeichnet, dass** parallel verlaufende Rasterlinien (06) in einem Abstand (C) von etwa 10 µm voneinander beabstandet sind.

57. System nach Anspruch 1, **dadurch gekennzeichnet, dass** mindestens ein Bildsensor mit einer Signale dieses Bildsensors auswertenden Bildauswertevorrichtung vorgesehen sind, wobei der Bildsensor ein Auftreten einer unerwünschten Verzerrung von auf der Fläche (02) auszubildenden Rasterpunkten (01) und/oder eines Registerfehlers und/oder einer Moire-Erscheinung erfasst.

58. System nach Anspruch 57, **dadurch gekennzeichnet, dass** die Bildauswertevorrichtung ihr Auswerteergebnis an die Steuervorrichtung (16) leitet.

59. System nach Anspruch 57, **dadurch gekennzeichnet, dass** die Bildauswertevorrichtung und die Steuervorrichtung (16) einen Regelkreis ausbilden, in welchem die Steuervorrichtung (16) in Abhängigkeit von dem von der Bildauswertevorrichtung als eine Führungsgröße bereitgestellten Auswerteergebnis der Bildauswertevorrichtung die Rasterung der Fläche (02) nachführt.

60. System nach Anspruch 57, **dadurch gekennzeichnet, dass** der Bildsensor als eine Kamera ausgebildet ist.

61. System nach Anspruch 57, **dadurch gekennzeichnet, dass** der Bildsensor in einer Druckmaschine angeordnet ist.

62. System nach Anspruch 57, **dadurch gekennzeichnet, dass** der Bildsensor auf den von Rasterpunkten (01) der Fläche (02) bedruckten Bedruckstoff gerichtet ist.

63. System nach Anspruch 1, **dadurch gekennzeichnet, dass** die Steuervorrichtung (16) aus der Startposition (04) und einer Endposition (08) einer Rasterlinie (06) deren Länge ermittelt.

64. System nach Anspruch 3, **dadurch gekennzeichnet, dass** die Steuervorrichtung (16) die Länge mindestens einer Rasterlinie (06) in äquidistante Teilstrecken unterteilt.

65. System nach Anspruch 64, **dadurch gekennzeichnet, dass** die Steuervorrichtung (16) nach jeder dieser Teilstrecken oder sich wiederholend nach einer bestimmten Anzahl dieser Teilstrecken einen auf der Rasterlinie (06) auszubildenden Rasterpunkt (01) in der stochastisch festgelegten Distanz (B) zu dessen berechneter Position ausbildet.

66. System nach Anspruch 1, **dadurch gekennzeichnet, dass** das Ausgabegerät (13) die Rasterpunkte (01) auf einer Fläche (02) mit zumindest einer geradlinigen Seitenbegrenzung (03) ausbildet.

## Claims

1. System for forming matrix dots (01), having an output device (13) with output elements (09) for forming the matrix dots (01) and a control apparatus (16), the output device (13) forming the matrix dots (01) on a surface (02), the output device (13) forming the matrix dots (01) on the surface (02) at positions along matrix lines (06) parallel to one another, beginning in each case with a start position (04), the control apparatus (16) calculating the respective positions of a plurality of matrix dots (01) to be formed along the same matrix line (06), before the formation thereof, **characterized in that** the output elements (09) are arranged along a straight line (07), a plurality of output elements (09) arranged along the straight line (07) operating in parallel during the formation of matrix dots (01) on the surface (02), the control apparatus (16) controlling, individually and independently of one another, the output elements (09) arranged along the straight line (07).

2. System according to Claim 1, **characterized in that** the control apparatus (16) determines the start position (04) of at least one matrix line (06), along which one of the output elements (09) arranged along the straight line (07) forms at least one matrix dot (01), individually and independently of the start position (04) of another matrix line (06) along which another of the output elements (09) arranged along the straight line (07) forms at least one matrix dot (01).

3. System according to Claim 1, **characterized in that** the control apparatus (16) divides a length of at least one of the matrix lines (06) into sections, the output device (13) forming, after a preset number of these sections, a matrix dot (01) to be formed on this matrix line (06) at a stochastically determined distance (B) from its calculated position.

4. System according to Claim 1, **characterized in that** the control apparatus (16) divides a distance (A) between the calculated positions of adjacent matrix dots (01) to be formed along the same matrix line (06) into a finite number of sections.

5. System according to Claim 4, **characterized in that** the control apparatus (16) increases the distance (A) between the calculated positions of adjacent matrix dots (01) as a function of the relative movement between the output elements (09) and the surface (02) optionally by adding at least one further section to the existing sections or reduces said distance (A) by omitting at least one section from the existing sections.

6. System according to Claim 1, **characterized in that** the output device (13) forms, along different matrix lines (06), the respective matrix dots (01) thereof as a function of a relative movement between output elements (09) of the output device (13) and the surface (02).

7. System according to Claim 6, **characterized in that** the output device (13) forms matrix dots (01) along different matrix lines (06) in the same movement process of the relative movement between the output elements (09) and the surface (02).

8. System according to Claim 7, **characterized in that** the control apparatus (16) determines the start position (04) of at least one of these matrix lines (06) offset in comparison with the start position (04) of one of the other matrix lines (06).

9. System according to Claim 6, **characterized in that** the relative movement between the output elements (09) and the surface (02) consists in a plurality of periodically repeating movement processes.

10. System according to Claim 6, **characterized in that** the output device (13) forms matrix dots (01) along a specified number of matrix lines (06) with each movement process on the surface (02).

11. System according to Claim 9, **characterized in that** the control apparatus (16) determines the start position (04) of at least one matrix line (06), individually and independently of the start position (04) of another matrix line (06), in each of the repeating movement processes with respect to the relative movement between the output elements (09) and the surface (02).

12. System according to Claim 6, **characterized in that** the relative movement between the output elements (09) and the surface (02) has at least one velocity component orthogonal to a linear lateral boundary (03) of the surface (02).

13. System according to Claim 6, **characterized in that** the relative movement between the output elements (09) and the surface (02) has a velocity component parallel to a linear lateral boundary (03) of the surface (02).

14. System according to Claim 1, **characterized in that** the matrix lines (06) form an oblique matrix angle (α) with a linear lateral boundary (03) of the surface (02).

15. System according to Claim 1, **characterized in that** the straight line (07) forms an oblique angle of rotation (β) with a linear lateral boundary (03) of the surface (02) in a plane parallel to the surface (02).

16. System according to Claim 14 or 15, **characterized in that** the matrix angle (α) and/or the angle of rotation (β) are dependent in each case at least on the velocity component in the direction parallel to a linear lateral boundary (03) of the surface (02).

17. System according to Claim 14 or 15, **characterized in that** matrix angle (α) and the angle of rotation (β) correspond to one another.

18. System according to Claim 14 or 15, **characterized in that** the control apparatus (16) calculates the respective positions of matrix dots (01) to be formed along the same matrix line (06) as a function of the matrix angle (α) and/or of the angle of rotation (β).

19. System according to Claim 14 or 15, **characterized in that** the control apparatus (16) calculates again the respective positions of matrix dots (01) to be formed along the same matrix line (06) after each change in the matrix angle (α) and/or in the angle of rotation (β).

20. System according to Claim 1, **characterized in that** the control apparatus (16) calculates the respective positions of all matrix dots (01) to be formed along the same matrix line (06).

21. System according to Claim 1, **characterized in that** the control apparatus (16) determines an absolute position of at least one matrix dot (01) to be formed on the surface (02).

22. System according to Claim 21, **characterized in that** the control apparatus (16) calculates further matrix dots (01) to be formed on the surface (02), relative to the absolute position determined.

23. System according to Claim 4, **characterized in that** the control apparatus (16) divides the respective distances (A) between the positions of adjacent matrix dots (01) of all matrix dots (01) to be formed along the same matrix line (06) into the same number of sections.

24. System according to Claim 4, **characterized in that** the sections dividing the distance (A) between the positions of adjacent matrix dots (01) are equidistant.

25. System according to Claim 4, **characterized in that** the control apparatus (16) produces a length of the sections dividing the distance (A) between the positions of adjacent matrix dots (01) to be formed along the same matrix line (06) from a signal correlating with a velocity component of the movement process which is orthogonal to a linear lateral boundary (03) of the surface (02).

26. System according to Claim 25, **characterized in that** the control apparatus (16) produces, by means of an encoder (17), the signal correlating with the velocity component of the movement process which is orthogonal to the linear lateral boundary (03) of the surface (02).

27. System according to Claim 26, **characterized in that** the control apparatus (16) generates a timing signal from signals of the encoder (17).

28. System according to Claim 27, **characterized in that** the control apparatus (16) sums pulses of the timing signal generated by the encoder (17) by means of a digital counter up to a preset value, the sum of the pulses accumulated up to this value forming a unit, this unit correlating with a section dividing the distance (A) between the positions of adjacent matrix dots (01) to be formed along the same matrix line (06).

29. System according to Claim 28, **characterized in that** the unit divides the distance (A) between the positions of adjacent matrix dots (01) to be formed along the same matrix line (06) into sections having a length of 100 nm or less.

30. System according to Claim 1, **characterized in that** the control apparatus (16) determines an end position (08) of at least one matrix line (06).

31. System according to Claim 30, **characterized in that** the control apparatus (16) changes the start position (04) and/or the end position (08) of at least one matrix line (06) by changing the distance (A) between the positions of adjacent matrix dots (01) to be formed along the same matrix line (06).

32. System according to Claim 1, **characterized in that** the output device (13) forms a matrix dot (01) correlating with a start position (04) of a matrix line (06) so that said matrix dot is offset with respect to time or by a distance compared with the matrix dot (01) correlating with the start position (04) of another matrix line (06).

33. System according to Claim 32, **characterized in that** the output device (13) forms the matrix dot correlating with the start position of a matrix line so that said matrix dot is ahead or lagging in time compared with the matrix dot (01) correlating with the start position (04) of the other matrix line (06).

34. System according to Claim 32, **characterized in that** the output device (13) forms the matrix dot (01) correlating with the start position (04) of a matrix line (06), which matrix dot is to be formed offset compared with the matrix dot (01) correlating with the start position (04) of another matrix line (06), starting from the start position (04) of the matrix dot (01) to be formed and offset by the distance, the distance shortening or lengthening the distance (A) between the start position (04) of the matrix dot (01) to be formed and a position of a matrix dot (01) following along this matrix line (06).

35. System according to Claim 34, **characterized in that** the distance which shortens or lengthens the distance (A) between the start position (04) of the matrix dot (01) to be formed and a position of a matrix dot (01) following along this matrix line (06) consists of a number of sections dividing the distance (A) between the positions of adjacent matrix dots (01).

36. System according to Claim 3, **characterized in that** the output device (13) forms the matrix dot (01) to be formed at the calculated position on the matrix line (06), ahead or lagging, starting from the calculated position thereof at the stochastically determined distance (B) along the matrix line (06).

37. System according to Claim 3, **characterized in that** a maximum value of the stochastically established distance (B) is at most one third of the distance (A) between the calculated positions along the matrix line (06) of adjacent matrix dots (01).

38. System according to Claim 3, **characterized in that** the control apparatus (16) determines the stochastically established distance (B) by means of a random generator.

39. System according to Claim 1, **characterized in that** the output device (13) carries out an imaging processing method.

40. System according to Claim 39, **characterized in that** the processing method operates without contact with respect to the surface (02).

41. System according to Claim 1, **characterized in that** the system is in the form of a laser system, an inkjet system, a system forming matrix dots (01) by utilizing a light-hydraulic effect or an exposure unit for exposing printing formes (11).

42. System according to Claim 1, **characterized in that** the output device (13) forms matrix dots (01) on a rectangular surface (02).

43. System according to Claim 1, **characterized in that** the output device (13) forms matrix dots (01) on a flat or curved surface (02).

44. System according to Claim 1, **characterized in that** the output device (13) forms matrix dots (01) on the surface (02) of a printing forme (11).

45. System according to Claim 1, **characterized in that** the output device (13) forms matrix dots (01) on the surface (02) of a rewritable printing forme (11).

46. System according to Claim 1, **characterized in that** the output device (13) forms matrix dots (01) on the surface (02) of a printing forme (11) arranged on the lateral surface of a forme cylinder (12) of a printing press.

47. System according to Claim 1, **characterized in that** the system is arranged in a printing press operating in a planographic printing process.

48. System according to Claim 1, **characterized in that** the system is arranged in a printing press operating in an offset printing process.

49. System according to Claim 1, **characterized in that** the system is arranged in a printing press printing on a print medium with a plurality of printing formes (11), the plurality of printing formes (11) printing on the print medium in succession for the production of a multicolour printed image with printing inks differing from one another in hue.

50. System according to Claim 1, **characterized in that** the output elements (09) emit a particle stream (14) or a wave (14).

51. System according to Claim 1, **characterized in that** the output elements (09) emit laser light (14).

52. System according to Claim 50, **characterized in that** the particle stream (14) emitted by the output elements (09) or the wave (14) emitted by the output elements (09) form a matrix dot (01) at their respective point of impingement on the surface (02) by application of material fed with the particle stream (14) or by removal of material of the surface (02) or by changing of the material of the surface (02) in its optical properties.

53. System according to Claim 1, **characterized in that** the relative movement is produced by an advance of the output device (13) in the axial direction of the forme cylinder (12) carrying the printing forme (11).

54. System according to Claim 1, **characterized in that** the relative movement is produced by a rotational movement of the forme cylinder (12).

55. System according to Claim 1, **characterized in that** the relative movement is produced by an advance of the output device (13) in the axial direction of the forme cylinder (12) carrying the printing forme (11), together with a simultaneous rotational movement of the forme cylinder (12).

56. System according to Claim 1, **characterized in that** parallel matrix lines (06) are at a distance (C) of about 10 µm apart.

57. System according to Claim 1, **characterized in that** at least one image sensor is provided with an image evaluation apparatus evaluating signals of this image sensor, the image sensor detecting the occurrence of an undesired distortion of matrix dots (01) to be formed on the surface (02) and/or a register error and/or a moiré phenomenon.

58. System according to Claim 57, **characterized in that** the image evaluation apparatus transmits its result of the evaluation to the control apparatus (16).

59. System according to Claim 57, **characterized in that** the image evaluation apparatus and the control apparatus (16) form a control loop in which the control apparatus (16) updates the matrix of the surface (02) as a function of the result of the evaluation of the image evaluation apparatus, which result is provided by the image evaluation apparatus as a reference variable.

60. System according to Claim 57, **characterized in that** the image sensor is in the form of a camera.

61. System according to Claim 57, **characterized in that** the image sensor is arranged in a printing press.

62. System according to Claim 57, **characterized in that** the image sensor is directed at the print medium on which matrix dots (01) of the surface (02) are printed.

63. System according to Claim 1, **characterized in that** the control apparatus (16) determines the length of a matrix line (06) from the start position (04) and an end position (08) of said matrix line.

64. System according to Claim 3, **characterized in that** the control apparatus (16) divides the length of at least one matrix line (06) into equidistant sections.

65. System according to Claim 64, **characterized in that** the control apparatus (16) forms a matrix dot (01) to be formed on the matrix line (06) at a stochastically established distance (B) from its calculated position after each of these sections or repeatedly after a certain number of these sections.

66. System according to Claim 1, **characterized in that** the output device (13) forms the matrix dots (01) on a surface (02) having at least one linear lateral boundary (03).

## Revendications

1. Système de déformation de points de trame (01), présentant un appareil d'édition (13), comprenant des éléments d'édition (09), pour réaliser les points de trame (01), et un dispositif de commande (16), l'appareil d'édition (13) réalisant les points de trame (01) sur une surface (02), l'appareil d'édition (13) réalisant les points de trame (01) sur la surface (02), en des positions situées le long de lignes de trame (06) parallèles les unes aux autres, en commençant chaque fois par une position de départ (04), le dispositif de commande (16) calculant les positions respectives de plusieurs points de trame (01) à réaliser le long de la même ligne de trame (06), avant leur réalisation, **caractérisé en ce que** les éléments d'édition (09) sont disposés le long d'une droite (07), plusieurs éléments d'édition (09), disposés le long de la droite (07), travaillant en parallèle lors de la réalisation de points de trame (01) sur la surface (02), le dispositif de commande (16) commandant, individuellement et indépendamment les uns des autres, les éléments d'édition (09) disposés le long de la droite (07).

2. Système selon la revendication 1, **caractérisé en ce que** le dispositif de commande (16) fixe la position de départ (04), au moins d'une ligne de trame (06) le long de laquelle l'un des éléments d'édition (09) disposés le long de la droite (07) réalise au moins un point de trame (01), individuellement et indépendamment de la position de départ (04) d'une autre ligne de trame (06) le long de laquelle un autre des éléments d'édition (09) disposés le long de la droite (07) réalise au moins un point de trame (01).

3. Système selon la revendication 1, **caractérisé en ce que** le dispositif de commande (16) subdivise en distances partielles une longueur d'au moins l'une des lignes de trame (06), l'appareil d'édition (13) réalisant, après un nombre pré-réglé de ces distances partielles, un point de trame (01) à réaliser sur cette ligne de trame (06), à une distance (B), fixée de manière stochastique, de sa position calculée.

4. Système selon la revendication 1, **caractérisé en ce que** le dispositif de commande (16) subdivise en un nombre fini de distances partielles un espacement (A) entre les positions calculées de points de trame (01) voisins, à réaliser le long de la même ligne de trame (06).

5. Système selon la revendication 4, **caractérisé en ce que** le dispositif de commande (16) augmente l'espacement (A) entre les positions calculées de points de trame (01) voisins, en fonction du déplacement relatif entre les éléments d'édition (09) et la surface (02), au choix par une insertion d'au moins une autre distance partielle aux distances partielles existantes, ou le diminue par une élimination d'au moins une distance partielle vis-à-vis des distances partielles existantes.

6. Système selon la revendication 1, **caractérisé en ce que** l'appareil d'édition (13) réalise, le long de différentes lignes de trame (06), leurs points de trame (01) respectifs, en fonction d'un déplacement relatif entre des éléments d'édition (09) de l'appareil d'édition (13) et la surface (02).

7. Système selon la revendication 6, **caractérisé en ce que** l'appareil d'édition (13) réalise, dans le même processus de déplacement du déplacement relatif entre des éléments d'édition (09) et la surface (02), des points de trame (01) le long de différentes lignes de trame (06).

8. Système selon la revendication 7, **caractérisé en ce que** le dispositif de commande (16) fixe la position de départ (04) d'au moins l'une de ces lignes de trame (06) de façon décalée par rapport à la position de départ (04) d'une des autres lignes de trame (06).

9. Système selon la revendication 6, **caractérisé en ce que** le déplacement relatif entre les éléments d'édition (09) et la surface (02) consiste en plusieurs processus de déplacement se répétant périodiquement.

10. Système selon la revendication 6, **caractérisé en ce que** l'appareil d'édition (13) réalise, à chaque processus de déplacement sur la surface (02), des points de trame (01) le long d'un nombre fixé de lignes de trame (06).

11. Système selon la revendication 9, **caractérisé en ce que** le dispositif de commande (16) fixe, dans chacun des processus de déplacement se répétant, eu égard au déplacement relatif entre les éléments d'édition (09) et la surface (02), la position de départ (04) au moins d'une ligne de trame (06), individuellement et indépendamment de la position de départ (04) d'une autre ligne de trame (06).

12. Système selon la revendication 6, **caractérisé en ce que** le déplacement relatif entre les éléments d'édition (09) et la surface (02) présente au moins une composante de vitesse orientée perpendiculairement à une délimitation de côté (03) rectiligne de la surface (2).

13. Système selon la revendication 6, **caractérisé en ce que** le déplacement relatif entre les éléments d'édition (09) et la surface (02) présente au moins une composante de vitesse orientée parallèlement à une délimitation de côté (03) rectiligne de la surface (2).

14. Système selon la revendication 1, **caractérisé en ce que** les lignes de trame (06) constituent un angle de trame (α) oblique avec une délimitation de côté (03) rectiligne de la surface (2).

15. Système selon la revendication 1, **caractérisé en ce que** la droite (7) constitue un angle de rotation (β) oblique, par rapport à une délimitation de côté (03) rectiligne de la surface (2), dans un plan parallèle à la surface (02).

16. Système selon la revendication 14 ou 15, **caractérisé en ce que** l'angle de trame (α) et/ou l'angle de rotation (β) dépendent chacun au moins de la composante de vitesse orientée dans une direction parallèle à une délimitation de côté (03) rectiligne de la surface (2).

17. Système selon la revendication 14 ou 15, **caractérisé en ce que** l'angle de trame (α) et l'angle de rotation (β) se correspondent l'un l'autre.

18. Système selon la revendication 14 ou 15, **caractérisé en ce que** le dispositif de commande (16) calcule les positions respectives de points de trame (01) à réaliser le long de la même ligne de trame (06), en fonction de l'angle de trame (α) et/ou de l'angle de rotation (β).

19. Système selon la revendication 14 ou 15, **caractérisé en ce que** le dispositif de commande (16) calcule de nouveau les positions respectives de points de trame (01) à réaliser le long de la même ligne de trame (06), après chaque modification de l'angle de trame (α) et/ou de l'angle de rotation (β).

20. Système selon la revendication 1, **caractérisé en ce que** le dispositif de commande (16) calcule les positions respectives de tous les points de trame (01) à réaliser le long de la même ligne de trame (06).

21. Système selon la revendication 1, **caractérisé en ce que** le dispositif de commande (16) détermine une position absolue au moins d'un point de trame (01) à réaliser sur la surface (02).

22. Système selon la revendication 21, **caractérisé en ce que** le dispositif de commande (16) calcule d'autres points de trame (01) à réaliser sur la surface (02), par rapport à la position absolue déterminée.

23. Système selon la revendication 4, **caractérisé en ce que** le dispositif de commande (16) subdivise en le même nombre fini de distances partielles les espacements (A) respectifs entre les positions de points de trame (01) voisins, de tous les points de trame (01) à réaliser le long de la même ligne de trame (06).

24. Système selon la revendication 4, **caractérisé en ce que** les distances partielles, subdivisant l'espacement (A) respectifs entre les positions de points de trame (01) voisins, sont équidistantes.

25. Système selon la revendication 4, **caractérisé en ce que** le dispositif de commande (16) génère une longueur des distances partielles subdivisant l'espacement (A) entre les positions de points de trame (01) voisins, à réaliser le long de la même ligne de trame (06), à partir d'un signal corrélant avec une composante de vitesse, orientée perpendiculairement à une délimitation de côté (03) rectiligne de la surface (2), du processus de déplacement.

26. Système selon la revendication 25, **caractérisé en ce que** le dispositif de commande (16) génère avec un codeur (17) le signal corrélant avec la composante de vitesse, orientée perpendiculairement à une délimitation de côté (03) rectiligne de la surface (2), du processus de déplacement.

27. Système selon la revendication 26, **caractérisé en ce que** le dispositif de commande (16) génère un signal de cadencement à partir de signaux du codeur (17).

28. Système selon la revendication 27, **caractérisé en ce que** le dispositif de commande (16) additionne, avec un compteur numérique, des impulsions du signal de cadencement généré par le codeur (17), jusqu'à une valeur pré-réglée, la somme des impulsions accumulées jusqu'à cette valeur formant une unité, cette unité étant en corrélation avec une distance partielle subdivisant l'espacement (A) entre les positions de points de trame (01) voisins, à réaliser le long de la même ligne de trame (06).

29. Système selon la revendication 28, **caractérisé en ce que** l'unité subdivise l'espacement (A) entre les positions de points de trame (01) voisins, à réaliser le long de la même ligne de trame (06), en des distances partielles d'une longueur de 100 nm ou moins.

30. Système selon la revendication 1, **caractérisé en ce que** le dispositif de commande (16) détermine une position finale (08) au moins d'une ligne de trame (06).

31. Système selon la revendication 30, **caractérisé en ce que** le dispositif de commande (16) modifie la position de départ (04) et/ou la position finale (08) au moins d'une ligne de trame (06), par une modification de l'espacement (A) entre les positions de points de trame (01) voisins, à réaliser le long de la même ligne de trame (06).

32. Système selon la revendication 1, **caractérisé en ce que** l'appareil d'édition (13) réalise un point de trame (01), en corrélation avec une position de départ (04) d'une ligne de trame (06), de façon décalée, temporellement ou d'une certaine distance, par rapport au point de trame (01) en corrélation avec la position de départ (04) d'une autre ligne de trame (06).

33. Système selon la revendication 32, **caractérisé en ce que** l'appareil d'édition (13) réalise le point de trame, en corrélation avec la position de départ (04) d'une ligne de trame, de façon décalée temporellement, en avance ou en retard, par rapport au point de trame (01) en corrélation avec la position de départ (04) de l'autre ligne de trame (06).

34. Système selon la revendication 32, **caractérisé en ce que** l'appareil d'édition (13) réalise, de façon décalée de la valeur de la distance en partant de la position de départ (04) du point de trame (01) à réaliser, le point de trame (01) en corrélation avec la position de départ (04) d'une ligne de trame (06), qui doit être réalisé de façon décalée par rapport au point de trame (01) en corrélation avec la position de départ (04) d'une autre ligne de trame (06), la distance raccourcissant ou allongeant l'espacement (A), entre la position de départ (04) du point de trame (01) à réaliser et une position d'un point de trame (01) subséquent, le long de cette ligne de trame (06).

35. Système selon la revendication 34, **caractérisé en ce que** la distance, raccourcissant ou allongeant l'espacement (A), entre la position de départ (04) du point de trame (01) à réaliser et une position d'un point de trame (01) subséquent, le long de cette ligne de trame (06), est composée d'un nombre de distances partielles subdivisant l'espacement (A) entre les positions de points de trame (01) voisins.

36. Système selon la revendication 3, **caractérisé en ce que** l'appareil d'édition (13) réalise le point de trame (01), à réaliser à la position calculée sur la ligne de trame (06), en avance ou en retard, en partant de sa position calculée dans la distance (B), fixée de manière stochastique, le long de la ligne de trame (06).

37. Système selon la revendication 3, **caractérisé en ce qu'**une valeur maximale de la distance (B), fixée de manière stochastique, est au maximum d'un tiers de l'espacement (A) entre les positions calculées, le long de la ligne de trame (06) de points de trame (01) voisins.

38. Système selon la revendication 3, **caractérisé en ce que** le dispositif de commande (16) détermine la distance (B) fixée de manière stochastique au moyen d'un générateur aléatoire.

39. Système selon la revendication 1, **caractérisé en ce que** l'appareil d'édition (13) effectue un procédé d'usinage produisant une image.

40. Système selon la revendication 39, **caractérisé en ce que** le procédé d'usinage produisant une image travaille sans contact eu égard à la surface (02).

41. Système selon la revendication 1, **caractérisé en ce que** le système est réalisé sous forme d'un système laser, d'un système à jet d'encre, d'une système réalisant des points de trame (01) en exploitant un effet photo-hydraulique, ou d'un appareil d'exposition, pour exposer des formes d'impression (11).

42. Système selon la revendication 1, **caractérisé en ce que** l'appareil d'édition (13) réalise des points de trame (01) sur une surface (02) à forme rectangulaire.

43. Système selon la revendication 1, **caractérisé en ce que** l'appareil d'édition (13) réalise des points de trame (01) sur une surface (02) plane ou incurvée.

44. Système selon la revendication 1, **caractérisé en ce que** l'appareil d'édition (13) réalise des points de trame (01) sur la surface (02) d'une forme d'impression (11).

45. Système selon la revendication 1, **caractérisé en ce que** l'appareil d'édition (13) réalise des points de trame (01) sur la surface (02) d'une forme d'impression (11) réinscriptible.

46. Système selon la revendication 1, **caractérisé en ce que** l'appareil d'édition (13) réalise des points de trame (01) sur la surface (02) d'une forme d'impression (11) disposée sur la surface d'enveloppe d'un cylindre de forme (12) d'une machine à imprimer.

47. Système selon la revendication 1**, caractérisé en ce que** le système est disposé dans une machine à imprimer travaillant dans un procédé d'impression planographique.

48. Système selon la revendication 1, **caractérisé en ce que** le système est disposé dans une machine à imprimer travaillant dans un procédé d'impression offset.

49. Système selon la revendication 1, **caractérisé en ce que** le système est disposé dans une machine à imprimer imprimant un matériau à imprimer avec plusieurs formes d'impression (11), la pluralité de formes d'impression (11) imprimant le matériau à imprimer les unes après les autres, pour produire une image d'impression polychrome, avec des encres d'impression se distinguant les unes des autres au niveau de la teinte.

50. Système selon la revendication 1, **caractérisé en ce que** les éléments d'édition (09) émettent un flux de particules (14) ou une onde (14).

51. Système selon la revendication 1**, caractérisé en ce que** les éléments d'édition (09) émettent une lumière laser (14).

52. Système selon la revendication 50, **caractérisé en ce que** le flux de particules (14) émis par les éléments d'édition (09), ou l'onde (14) émise par les éléments d'édition (09), constituent, à leur point d'impact respectif sur la surface (02), un point de trame (01) par une application de matériau amené avec le flux de particules (14), ou par un enlèvement de matériau de la surface (02), ou par une modification du matériau de la surface (02) dans ses propriétés optiques.

53. Système selon la revendication 1, **caractérisé en ce que** le déplacement relatif est fourni par un déplacement d'avancement de l'appareil d'édition (13), dans la direction axiale du cylindre de forme (12) portant la forme d'impression (11).

54. Système selon la revendication 1, **caractérisé en ce que** le déplacement relatif est fourni par un déplacement rotatif du cylindre de forme (12).

55. Système selon la revendication 1, **caractérisé en ce que** le déplacement relatif est fourni par un déplacement d'avancement de l'appareil d'édition (13), dans la direction axiale du cylindre de forme (12) portant la forme d'impression (11), conjointement avec un mouvement rotatif simultané du cylindre de forme (12).

56. Système selon la revendication 1, **caractérisé en ce que** des lignes de trame (06), s'étendant parallèlement sont espacées les unes des autres d'un espacement (C) d'à peu près 10 µm.

57. Système selon la revendication 1, **caractérisé en ce que** sont prévus au moins un capteur d'images, avec un dispositif d'évaluation d'images évaluant des signaux de ce capteur d'images, le capteur d'images appréhendant une survenance d'une distorsion indésirable de points de trame (01) à réaliser sur la surface (02) et/ou d'un défaut de repérage et/ou d'un phénomène de moiré.

58. Système selon la revendication 57, **caractérisé en ce que** le dispositif d'évaluation d'images fournit son résultat d'évaluation au dispositif de commande (16).

59. Système selon la revendication 57, **caractérisé en ce que** le dispositif d'évaluation d'images et le dispositif de commande (16) constituent un circuit de régulation, dans lequel le dispositif de commande (16), en fonction du résultat d'évaluation, fourni par le dispositif d'évaluation d'images sous la forme d'une grandeur de réglage, du dispositif d'évaluation d'images, suit le tramage de la surface (02).

60. Système selon la revendication 57, **caractérisé en ce que** le capteur d'image est réalisé sous la forme d'une caméra.

61. Système selon la revendication 57, **caractérisé en ce que** le capteur d'images est disposé dans une machine à imprimer.

62. Système selon la revendication 57, **caractérisé en ce que** le capteur d'images est orienté sur le matériau à imprimer, imprimé par des points de trame (01) de la surface (02).

63. Système selon la revendication 1, **caractérisé en ce que**, à partir de la position de départ (04) et d'une position d'arrivée (08) d'une ligne de trame (06), le dispositif de commande (16) détermine sa longueur.

64. Système selon la revendication 3, **caractérisé en ce que** le dispositif de commande (16) subdivise en distances partielles équidistantes la longueur d'au moins une ligne de trame (06).

65. Système selon la revendication 64, **caractérisé en ce que** le dispositif de commande (16), après chacune de ces distances partielles, ou en se répétant après un nombre déterminé de ces distances partielles, réalise un point de trame (01) à réaliser sur la ligne de trame (06), à la distance (B), fixée de manière stochastique, de sa position calculée.

66. Système selon la revendication 1, **caractérisé en ce que** l'appareil d'édition (13) réalise les points de trame (01) sur une surface (02) ayant au moins une délimitation de côté (03) rectiligne.
